# FASCICULE DE BREVET EUROPEEN

(11) **EP 1 950 926 B1**
(45) Date de publication et mention de la délivrance du brevet: **05.06.2013**
(21) Numéro de dépôt: 07121318.5
(22) Date de dépôt: 22.11.2007
(51) Int. Cl.: H04L 29/06

(54) **Architecture IMS utilisant une table de hachage distribuée**
IMS Architektur mit verteiltem Haching Table
IMS architecture with distributed hash table

(30) Priorité: 29.01.2007 FR 0752924
(43) Date de publication de la demande: 30.07.2008
(73) Titulaire: Alcatel Lucent, 75007 Paris (FR)
(72) Inventeur: Leygue, François, 75003 PARIS (FR)
(74) Mandataire: Sciaux, Edmond

(56) Documents cités:
- EP-A- 1 313 287
- WO-A-2006/068365
- US-A1- 2004 184 452
- NN: "3GPP: Technical Specification Group Services and System Aspects; IP Multimedia Subsystem (IMS); Stage 2 (Release 7)" 3GPP, décembre 2006 (2006-12), pages 1-215, XP002450773 Sophia Antipolis, France
- SINGH H SCHULZRINNE DEPARTMENT OF COMPUTER SCIENCE K ET AL: "Data format and interface to an external peer-to-peer network for SIP location service" IETF STANDARD-WORKING-DRAFT, INTERNET ENGINEERING TASK FORCE, IETF, CH, 31 mai 2006 (2006-05-31), XP015045369 ISSN: 0000-0004

## Description

L'invention concerne les réseaux de communication et plus particulièrement les sous-systèmes multimédias IP ou IMS (*IP Multimedia Subsystem*) tels que normalisés par le 3GPP et l'ETSI Tispan.

L'architecture IMS est spécifiée par le document TS 23.228 du 3GPP^{™}, intitulé « IP Multimedia Subsystem (IMS); Stage 2 (Release 7).

L'objectif de l'architecture IMS est de fournir une solution de convergence entre les infrastructures fixes et mobiles des réseaux de communication. Cette infrastructure commune permet en outre de déployer les services de télécommunication connus (transfert d'appel, facturation, video-conférence....) ou encore à venir.

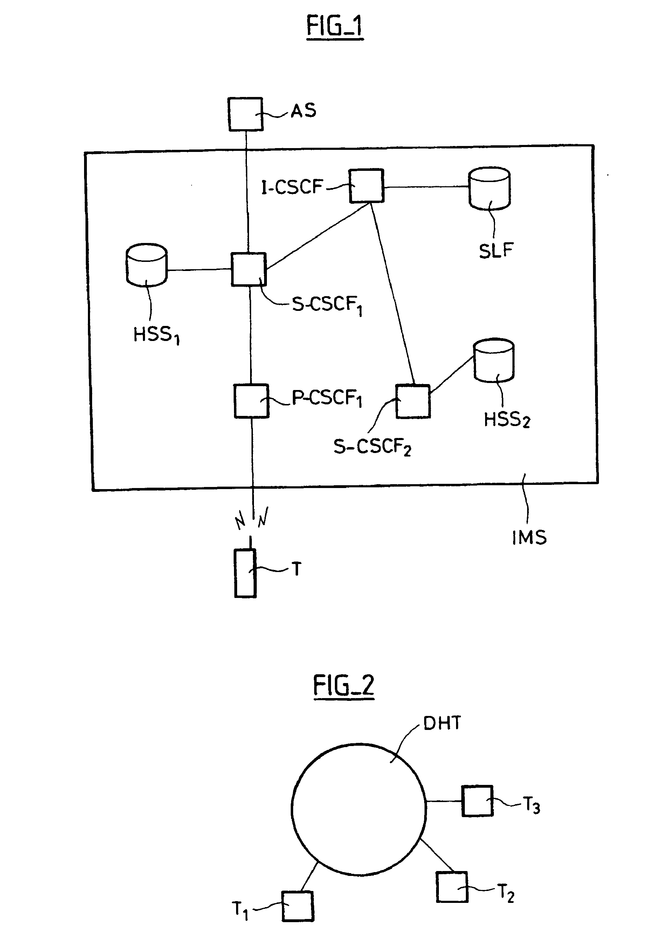

La figure 1 illustre une architecture IMS simplifiée. Il est à noter que cette architecture est fonctionnelle : un même élément fonctionnel est donc susceptible d'être réparti sur plusieurs équipements de réseau, et, inversement, un même équipement de réseau peut réaliser plusieurs fonctions de l'architecture IMS.

Un sous-système multimédia IMS comporte principalement trois fonctions CSCF (« *Call Session Control Function* ») :
- Le P-CSCF (« *Proxy CSCF* ») est le point de contact des terminaux (ou clients) de communication T dans le réseau de communication IMS. Un de ses rôles est d'authentifier le terminal T et éventuellement d'inspecter les messages de signalisation qui en proviennent.
- Le S-CSCF (« *Serving CSCF* ») permet l'interface entre les serveurs d'applications AS, et permet le routage des messages de signalisation au sein du réseau de communication IMS, en collaboration avec le serveur d'abonnées HSS (« *Home Subscribe*r *Server* »), provenant ou destiné d'un client connecté à ce sous-système.
- Le I-CSCF (« *Interrogating CSCF* ») permet l'interfaçage avec d'autres réseaux IMS et l'acheminement des messages de signalisation de sous-système en sous-système.

Lorsqu'un terminal de communication s'enregistre auprès du réseau de communication IMS, il transmet un message de signalisation d'enregistrement à un élément fonctionnel S-CSCFI au travers de l'élément fonctionnel P-CSCFI auquel il est rattaché.

Ce message de signalisation permet à l'élément S-CSCFI d'ajouter une information au sein du serveur d'abonnées HSS1 mettant en correspondance l'adresse logique de l'utilisateur du terminal T (c'est-à-dire l'abonné au réseau IMS) avec l'identifiant de l'élément S-CSCFI .

Un élément fonctionnel SLF (« *Subcription Locator Function* » ou fonction de localisation d'abonné) est également impacté et mémorise l'association entre l'adresse logique de l'utilisateur du terminal T avec le serveur d'abonnées HSS1 qui possède ses informations.

Enfin, l'élément S-CSCF1 conserve quant-à-lui l'association entre l'adresse logique et l'adresse physique du terminal T.

L'élément fonctionnel S-CSCFI est par ailleurs relié à un serveur d'applications AS qui permet de fournir aux abonnés différents services de télécommunication : facturation, mise en attente (« *call waiting* »)*,* re-direction d'appels, annonces, audio et/ou vidéo conférence... L'élément fonctionnel S-CSCFI est donc à même d'analyser les messages de signalisation afin de contacter un ou plusieurs serveurs d'applications AS en fonction de son contenu.

Lors d'un appel entrant destiné au client T, les éléments SLF, HSS1 et S-CSCF1 sont utilisés comme moyen permettant d'associer l'adresse logique contenue dans le message de signalisation entrant, et l'adresse physique du client T.

Ainsi que spécifié par les organismes de normalisation 3GPP (« *3^{rd} generation partnership project* ») et ETSI (*European Telecommunication Standard Institute*), le protocole de communication utilisée pour la transmission des messages de signalisation est le protocole SIP (« *Session Initiation Protocol* »). Ce protocole est spécifié dans le RFC 3261 de l'IETF (« *Internet Engineering Task Force* ») et étendu par d'autres RFC ultérieurs.

Le message de signalisation d'enregistrement est ainsi normalement un message SIP « REGISTER », et le message de signalisation d'invitation est un message SIP « INVITE ».

Avec le déploiement des architectures IMS, la demanderesse attend une explosion des adresses logiques et des terminaux susceptibles de se connecter. En effet, il va devenir possible de connecter un grand nombre de terminaux pour un même abonné (ordinateur, téléphone fixe, téléphone portable, assistant personnel, télévision...). Il sera également possible de connecter des équipements qui sont aujourd'hui habituellement déconnectés des réseaux de communication (appareils électroménagers...) afin de fournir de nouveaux services aux utilisateurs.

Le serveur d'abonnés HSS et surtout l'élément de localisation d'abonné SLF vont alors voir leurs tailles augmenter considérablement. Ils vont devenir des noeuds d'étranglement au sein de l'architecture IMS : leurs tailles augmentant, ils deviendront plus difficiles à gérer et leurs temps d'accès augmenteront de même, pénalisant les performances générales du système.
Un procédé de transmission d'un message de signalisation au travers un IMS est décrit dans la spécification "3GPP: Technical Specification Group Services and Systems Aspects; IP Multimedia Subsystem (IMS); Stage 2 (Release 7)".

Un but de l'invention est de résoudre ce problème en proposant une architecture distribuée.

Une approche distribuée a déjà été proposée par l'article « *Using an External DHT as a SIP Location Service* » de Kundan Singh et Henning Schulzrinne, ou bien par l'article « *Peer-to-peer Internet Telephony using SIP* » par les mêmes auteurs.

La demande de brevet WO2006/068365 présente une approche similaire.

Cette approche est illustrée par la figure 2.

Les terminaux (ou clients) T1, T2, T3 sont connectés à une table de hachage distribuée DHT (pour « *Distributed Hashing Table* »). Cette table de hachage distribuée joue le rôle du registre SIP (« *registrar* ») dans une architecture SIP classique : les associations entre adresses logiques d'abonnés et adresses physiques de terminaux sont mémorisées au sein de cette table de hachage distribuée.

Chacun des terminaux T1, T2, T3 possède une partie de cette table de hachage. En utilisant les mécanismes de la table de hachage distribués, un terminal peut obtenir une adresse physique d'un terminal à partir de l'adresse logique de l'abonné qu'il souhaite appeler.

Comme le registre est distribué sur une pluralité de terminaux, il n'y a plus d'engorgement au sein d'un serveur central d'abonné comme dans l'architecture IMS.

Toutefois, cette approche n'est pas compatible avec l'architecture IMS, telle que spécifiée par les normes 3GPP et ETSI TISPAN.

En effet, les terminaux doivent être modifiés : ils n'interagissent pas avec un élément fonctionnel P-CSCF au travers d'une interface normalisée, mais doivent implémenter une table de hachage distribuée DHT et implémenter un protocole particulier.

Un autre état de la technique est fourni par le produit Skype de téléphonie par Internet. Le principe est principalement le même mais le protocole utilisé est un protocole propriétaire et non le protocole SIP.

Dans la mesure où il s'agit d'une solution propriétaire, les terminaux doivent obligatoirement comporter un module fournit par la société Skype, et comme précédemment, ils ne s'interfacent pas avec un élément fonctionnel P-CSCF de l'architecture IMS.

Il est généralement admis que l'approche distribuée, basée sur l'intelligence des terminaux, et l'approche IMS, basée sur la localisation de l'intelligence dans le réseau de communication, sont antinomiques. On pourra par exemple consulter l'encyclopédie participative Wikipedia, à l'adresse : http://fr.wikipedia.org/wiki/P2P

Le but de la présente invention est d'adopter le principe d'une architecture distribuée pour mettre en oeuvre l'association entre adresses logiques et adresses physiques mais de demeurer compatible avec l'architecture IMS. Notamment, un des buts de l'invention est d'être transparente vis à vis des terminaux de communication.

Pour ce faire, l'invention a pour premier objet un sous-système multimédia, IMS, comportant un ensemble d'éléments fonctionnels de contrôle de session d'appel, CSCF, aptes à transmettre un message de signalisation entre un premier client de communication connecté audit sous-système multimédia, et au moins un second client de communication. Le second client de communication peut être connecté au sous-système multimédia ou distant et accessible au travers d'un élément fonctionnel d'interrogation, I-CSCF. Le sous-système multimédia comporte en outre des moyens de routage permettant de déterminer un chemin pour la transmission du message de signalisation, à partir d'une adresse logique contenue dans le message de signalisation. Le sous-système multimédia se caractérise en ce que ces moyens de routage mettent en oeuvre une table de hachage distribuée.

Selon un premier mode de réalisation de l'invention, les moyens de routage comportent un élément fonctionnel de sélection d'abonné, SLF, permettant de déterminer le serveur d'abonnés HSS associé à l'adresse logique et mis en oeuvre par une table de hachage distribué.

Selon un second mode de réalisation, le sous-système multimédia, IMS, comporte une pluralité de domaines comportant chacun un ensemble d'éléments fonctionnels de contrôle de session d'appel, CSCF. Les moyens de routage comportent un élément fonctionnel de fédération permettant la détermination d'un de ces domaines à partir de l'adresse logique (contenue dans le message de signalisation), et sont mis en oeuvre par une table de hachage distribuée.

Selon une mise en oeuvre de ce mode de réalisation de l'invention, les éléments fonctionnels serveurs, S-CSCF, d'au moins certains des domaines forment les noeuds de la table de hachage distribuée.

Au moins un domaine peut être prévu pour que les messages de signalisation provenant dudit premier client de communication connecté à ce domaine soient transmis à l'élément fonctionnel d'interrogation, I-CSCF, du domaine en question. Cet élément fonctionnel d'interrogation est alors lui-même prévu pour interroger l'élément fonctionnel de fédération afin de déterminer le chemin pour les messages de signalisation.

L'élément fonctionnel d'interrogation peut par exemple mettre en oeuvre les fonctions d'une passerelle THIG.

L'élément fonctionnel d'interrogation, I-CSCF, peut par ailleurs être prévu pour, à réception d'un message de signalisation provenant du premier client de communication, déterminer si le client de communication destinataire déterminé par l'adresse logique contenue dans le message de signalisation est connecté à un de ces domaines ; et dans la négative transmettre le message de signalisation hors du sous-système multimédia sans interroger l'élément fonctionnel de fédération.

Les éléments fonctionnels d'interrogation, I-CSCF, peuvent au contraire être prévus pour, à réception d'un message de signalisation provenant du premier client de communication, interroger systématiquement l'élément fonctionnel de fédération (FF) et, en l'absence d'une réponse de celui-ci déterminant un chemin, transmettre le message de signalisation hors du sous-système multimédia.

L'interface entre les éléments fonctionnels d'interrogation des domaines et l'élément fonctionnel de fédération peut être une interface Dx, mettant en oeuvre le protocole Diameter.

Cette interface peut comporter une première fonction permettant l'insertion d'une association entre adresse logique et domaine et une seconde fonction permettant la détermination du domaine correspondant à une adresse logique donnée.

Les adresses logiques peuvent quant-à-elles comporter un identifiant correspondant au sous-système multimédia.

L'invention a pour deuxième objet un réseau de communication comportant au moins un sous-système multimédia, IMS, tel que précédemment décrit.

L'invention a pour troisième objet un élément fonctionnel de fédération pour sous-système multimédia, IMS. Le sous-système multimédia comporte une pluralité de domaines comportant chacun un ensemble d'éléments fonctionnels de contrôle de session d'appel, CSCF. Selon cet objet de l'invention, l'élément fonctionnel de fédération comporte des moyens pour déterminer un domaine à partir d'une adresse logique contenue dans un message de signalisation, ces moyens mettant en oeuvre une table de hachage distribuée.

Les éléments fonctionnels serveurs, S-CSCF, d'au moins certains de ces domaines peuvent former les noeuds de la table de hachage distribuée.

L'élément fonctionnel de fédération peut présenter une interface Dx mettant en oeuvre le protocole Diameter.

Cette interface peut comporter une première fonction permettant l'insertion d'une association entre adresse logique et domaine et une seconde fonction permettant la détermination du domaine correspondant à une adresse logique donnée.

L'invention a pour quatrième objet un procédé de transmission d'un message de signalisation au travers d'un sous-système multimédia, IMS, comportant un ensemble d'éléments fonctionnels de contrôle de session d'appel, CSCF, entre un premier client de communication, connecté à ce sous-système multimédia, et un second client de communication qui peut être connecté au sous-système multimédia ou distant et accessible au travers d'un élément fonctionnel d'interrogation, I-CSCF.

Le procédé comprend une étape de détermination d'un chemin pour la transmission du message de signalisation, à partir d'une adresse logique contenue dans ce message de signalisation.

Le procédé est caractérisé en ce que cette étape met en oeuvre une table de hachage distribuée.

Selon un premier mode de réalisation, le procédé comporte une étape de détermination d'un serveur d'abonnés HSS associé à l'adresse logique ; cette détermination étant effectuée par un élément fonctionnel de sélection d'abonné, SLF, mis en oeuvre par une table de hachage distribué.

Selon un second mode de réalisation, le sous-système multimédia comporte une pluralité de domaines comportant chacun un ensemble d'éléments fonctionnels de contrôle de session d'appel, CSCF.

Le procédé comporte une étape de détermination d'un domaine parmi cette pluralité, à partir de l'adresse logique ; la détermination étant effectuée par un élément fonctionnel de fédération mis en oeuvre par une table de hachage distribuée.

Selon une mise en oeuvre de ce mode de réalisation, les éléments fonctionnels serveurs, S-CSCF, d'au moins certains des domaines forment les noeuds de la table de hachage distribuée.

Par ailleurs, au moins un domaine peut être prévu pour que les messages de signalisation provenant d'un client de communication connecté à ce domaine soient transmis à l'élément fonctionnel d'interrogation, I-CSCF, du domaine. L'élément fonctionnel d'interrogation peut lui-même être prévu pour interroger l'élément fonctionnel de fédération afin de déterminer le chemin pour ces messages de signalisation.

L'invention a également pour objet un produit logiciel mettant en oeuvre ce procédé dans ses différentes mises en oeuvre possibles.

L'invention a aussi pour objet un système comportant un serveur de noms de domaine, DNS, et un élément fonctionnel de fédération selon le troisième objet de l'invention.

Enfin, l'invention a également pour objet un élément fonctionnel d'interrogation I-CSCF pour domaine d'un sous-système multimédia, IMS, comportant une pluralité de domaines, chacun comportant un ensemble d'éléments fonctionnels de contrôle de session d'appel, CSCF, et un élément fonctionnel de fédération permettant d'acheminer des messages de signalisation entre ces domaines du sous-système multimédia.

L'élément fonctionnel d'interrogation est prévu pour recevoir un message de signalisation provenant d'un premier client connecté à ce domaine et destiné à un second client.

Il se caractérise en ce qu'il est outre prévu pour
- Déterminer si le second client est connecté à un des domaines du sous-système multimédia,
- Dans la négative, transmettre le message de signalisation hors du sous-système multimédia sans interroger l'élément fonctionnel de fédération, et
- Dans l'affirmative, interroger l'élément fonctionnel de fédération afin de déterminer le chemin pour ce message de signalisation.

L'invention, ses différentes mises en oeuvre et ses avantages apparaîtront de façon plus claire dans la description de mises en oeuvre qui va suivre, en liaison avec les figures annexées.
La figure 1, précédemment commentée, représente l'architecture IMS.
La figure 2, également déjà commentée, représente une solution de l'état de la technique.
La figure 3 schématise une première mise en oeuvre de l'invention.
La figure 4 schématise une deuxième mise en oeuvre de l'invention.
La figure 5 illustre le fonctionnement d'une table de hachage distribuée.

### Première mise en oeuvre

Selon une première mise en oeuvre de l'invention, l'élément fonctionnel de localisation d'abonné, SLF, est mis en oeuvre par une table de hachage distribué.

L'élément fonctionnel de localisation d'abonné SLF (pour « *Subscriber Locator Function* » ou « *Subscriptio*n *Locator Function* ») est un élément fonctionnel qui permet de déterminer un serveur d'abonnés HSS dans un sous-système multimédia IMS qui en comporte plusieurs.

Cet élément fonctionnel est par exemple décrit par dans les documents TS 29.228 et TS 29.229, respectivement intitulés « *IP Multimedia (IM) Subsystem Cx and Dx Interfaces; Signalling flows and message contents* » et « *Cx and Dx interfaces based on the Diameter protocol; Protocol details* ». Ces deux documents sont établis par l'organisme de standardisation 3GPP et sont disponibles sur son site web.

L'élément fonctionnel SLF est également mentionné dans le RFC 4457 de l'IETF intitulé « *The Session Initiation Protocol (SIP) - P-User-Database Private-Header (P-Header)* » publié en avril 2006.

Cet élément fonctionnel de sélection d'abonnés SLF fait partie des moyens de routage du sous-système multimédia IMS, c'est-à-dire de l'ensemble des moyens techniques qui permettent la résolution d'une adresse logique contenue dans un message de signalisation pour l'acheminer vers la destination qui lui correspond. Outre cette élément SLF, les moyens de routage peuvent également comprendre les serveurs d'abonnés HSS, les éléments fonctionnels serveurs S-CSCF, et les serveurs de noms de domaines DNS (pour « *Domain Name Server* »).

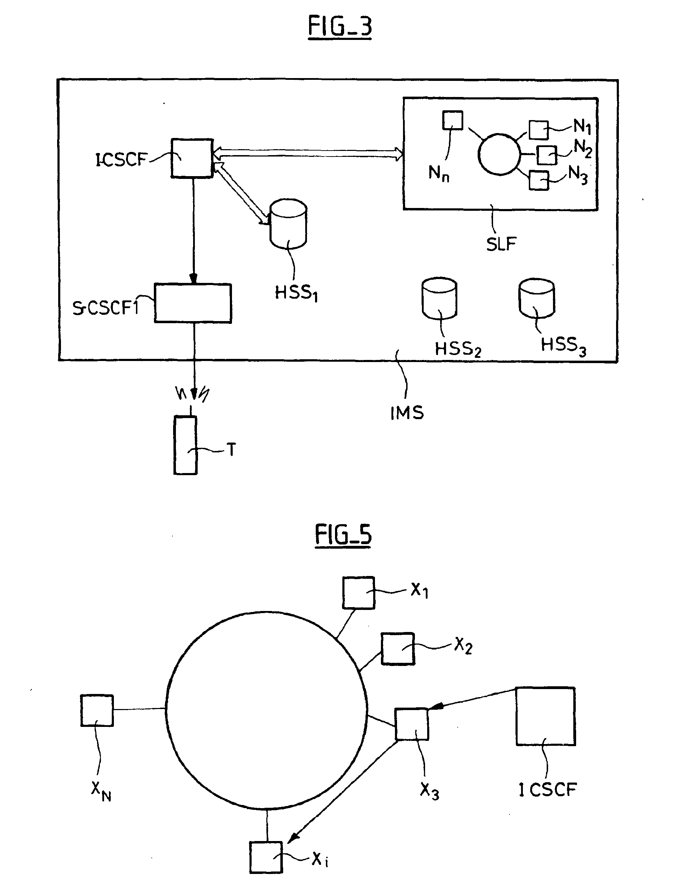

Il est possible qu'un sous-système multimédia IMS possède plusieurs serveurs d'abonnés HSS. Sur la figure 3, trois serveurs d'abonnés HSS₁, HSS₂, HSS₃ ont été représentés.

Lorsque l'élément fonctionnel d'interrogation I-CSCF reçoit un message de signalisation entrant (ou un appel entrant), il doit déterminer comment acheminer ce message vers le client de communication destinataire. C'est par exemple le cas des messages d'invitation SIP (« Invite ») visant à l'établissement d'une session d'appel. Ces messages d'invitation « Invite » contiennent, conformément au protocole SIP, l'adresse logique d'un ou plusieurs abonnés destinataires.

Pour acheminer le message de signalisation « Invite » jusqu'au client de communication destinataire T, il interroge l'élément fonctionnel de localisation d'abonné SLF, en fournissant dans sa requête l'adresse logique de destinataire contenue dans le message de signalisation « Invite ».

Celui-ci détermine un identificateur de serveur d'abonnés associé à cette adresse logique, et le transmet dans un message de réponse à l'élément fonctionnel d'interrogation I-CSCF.

Possédant cet identificateur (son adresse IP, par exemple), il peut alors interroger le bon serveur d'abonnés HSS1, c'est-à-dire celui qui possède les informations relatives à l'abonné utilisateur du client de communication T et correspondant à l'adresse logique.

Le serveur d'abonnés contient des associations entre adresses logiques et identificateurs d'éléments fonctionnels serveurs S-CSCF. En fournissant l'adresse logique dans sa requête, l'élément fonctionnel d'interrogation I-CSCF reçoit en réponse un identifiant de l'élément fonctionnel serveur S-CSCF₁ auprès duquel le client de communication destinataire T s'est enregistré.

Il peut alors transmettre le message de signalisation « Invite » à cet élément fonctionnel serveur S-CSCF₁. Celui-ci possède les informations relatives au client de communication T et à l'abonné utilisateur de ce client.

Il possède notamment l'association entre l'adresse logique de l'abonné et l'adresse physique du client de communication T. Il peut alors transmettre le message de signalisation jusqu'à l'abonné destinataire en utilisant l'adresse physique (par exemple son adresse IP) de son client de communication T.

Par ailleurs, lorsqu'un client de communication T s'enregistre auprès du sous-système multimédia IMS, des informations sont mémorisées au sein de l'élément fonctionnel serveur S-CSCF₁ auquel il est rattaché, au sein d'un serveur d'abonnés HSS₁, et au sein de l'élément fonctionnel de sélection d'abonnés SLF.

Il est possible de limiter la taille des serveurs d'abonnés HSS en les démultipliant, mais l'élément fonctionnel de localisation d'abonnés SLF reste quant-à-lui un élément centralisé dont la taille est proportionnelle au nombre d'abonnés (c'est-à-dire d'adresses logiques enregistrés).

Selon l'invention, cet élément fonctionnel de localisation d'abonnés SLF est mis en oeuvre par une table de hachage distribuée. Il comporte donc un ensemble de noeuds N₁, N₂...Nₙ connectés les uns aux autres.

Le fonctionnement plus détaillé de ce réseau de noeuds sera explicité plus bas. Il importe toutefois que celui-ci présente comme interface
- une fonction permettant la détermination d'un serveur d'abonnés HSS en fonction d'une adresse logique ; et,
- une fonction permettant de mémoriser dans la table de hachage distribuée une association entre l'adresse logique de l'utilisateur du client de communication T et le serveur d'abonnés HSS₁ qui lui a été attribué.

Ce premier mode de réalisation présente l'avantage de ne modifier que l'implémentation de l'élément fonctionnel de localisation d'abonnés SLF.

Celui-ci peut conserver la même interface et par exemple une interface Dx conforme au protocole Diameter. De cette façon, il peut s'interfacer avec les autres éléments fonctionnels du sous-système multimédia IMS, sans nécessiter de modification de leur part.

### Seconde mise en oeuvre

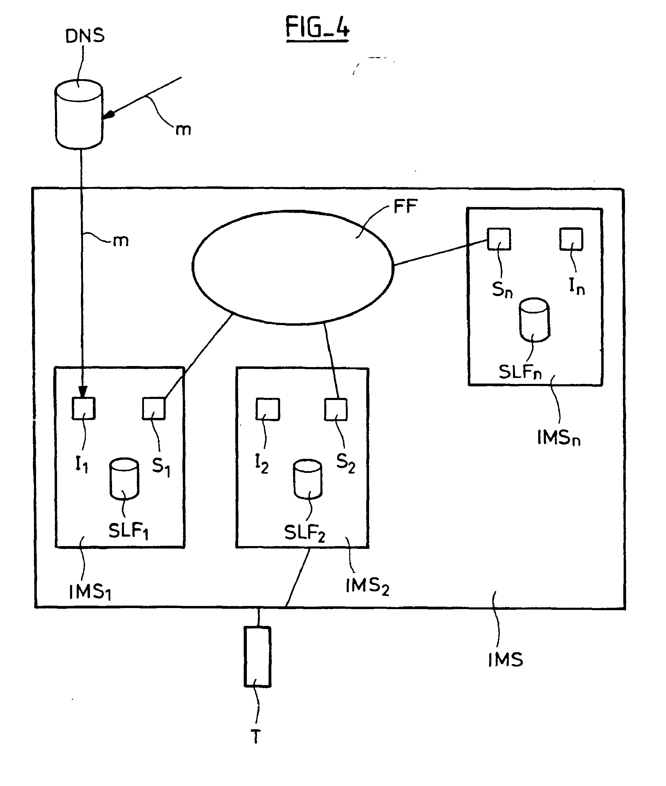

Selon une seconde mise en oeuvre de l'invention, illustrée par la figure 4, le sous-système multimédia IMS comporte une pluralité de domaines, IMS₁, IMS₂... IMSₙ. Chaque domaine peut être vu comme un sous-système IMS à part entière, possédant ses propres éléments fonctionnels de contrôle d'appel, CSCF (« *Call Session Control Function* ») :
- un élément fonctionnel serveur S-CSCF, respectivement S₁, S₂... Sₙ
- un élément fonctionnel d'interrogation I-CSCF, respectivement I₁, I₂... Iₙ.
- (éventuellement) un élément fonctionnel de proximité P-CSCF, non représenté.

Les moyens de routage comportent, comme dans l'exemple précédent, des éléments fonctionnels de sélection d'abonnés SLF₁, SLF₂... SLFₙ; des éléments fonctionnels serveurs, S₁, S₂... Sₙ; un serveur de noms de domaines DNS ; des serveurs d'abonnés (HSS, non représentés).

Selon l'invention, ils comportent un outre un élément fonctionnel de fédération FF. Ce nouvel élément fonctionnel permet de déterminer un des domaines IMS₁, IMS₂... IMSₙ en fonction d'une adresse logique contenue dans un message de signalisation.

Cet élément fonctionnel de fédération FF est mis en oeuvre par une table de hachage distribuée.

### Table de hachage distribuée

Une table de hachage distribuée (ou DHT pour « *Distributed Hash Table* » en langue anglaise) est une technologie permettant la mémorisation et la récupération d'une information dans un système massivement réparti comme un réseau poste à poste (ou « peer to peer network » en langue anglaise). Par principe, le contenu de la table de hachage est réparti sur l'ensemble des postes ou noeuds du réseau et il n'y aucun dispositif centralisé.

De telles tables de hachage distribuées sont par exemple décrites dans l'article « Looking up Data in P2P Systems » de H. Balakrishna, F. Kaashoek, D. Karger, R. Morris et I. Stoica, paru en février 2003, dans la revue Communications of the ACM, vol. 46, no. 2.

La demande de brevet WO02006/068365 évoquent quelques principes de l'état de la technique et propose une nouvelle approche de table de hachage distribuée.

Il existe différentes implémentations possibles d'une table de hachage distribuée. La figure 5 illustre un exemple simplifié pour la facilité de compréhension, mais l'invention ne saurait être comprise comme se limitant à cette mise en oeuvre particulière.

L'ensemble des noeuds X₁, X₂, X₃.... X_{N} de la table de hachage DHT joue le même rôle. Afin de mémoriser ou de récupérer une valeur dans cette table (ou réseau), on s'adresse indifféremment à l'un de ces noeuds.

Dans l'exemple de la figure 5, l'élément fonctionnel d'interrogation I-CSCF interroge le noeud X₃, en lui fournissant une adresse logique.

Celui-ci calcule une fonction de hachage sur cette adresse logique.

Une fonction de hachage est une fonction qui permet la conversion d'une valeur appartenant à un ensemble de taille importante (l'ensemble des adresses logiques possibles) en une seconde valeur appartenant à un ensemble de taille plus réduite. Cette seconde valeur est ici un nombre entier compris entre 1 et N où N est le nombre de noeuds dans la table de hachage distribuée DHT.

La fonction de hachage H doit généralement respecter la propriété mathématique suivante : H(x) ≠ H(y) ⇒ x ≠ y

En outre, si x = y alors il faut que la probabilité soit importante que H(x)=H(y).

La valeur i retournée par la fonction de hachage indique au noeud X₃ que le noeud Xᵢ est probablement celui qui possède l'association entre l'adresse logique reçue et le domaine correspondant. Il transmet la requête vers ce noeud Xᵢ. Si celui-ci possède effectivement l'association, il peut retourner le domaine associé à l'adresse logique. Sinon, il peut transmettre la requête à un autre noeud (voisin) qui est susceptible de posséder l'association.

De façon itérative, l'algorithme converge vers le noeud qui possède effectivement l'association.

Le principe de la mémorisation d'une nouvelle association est similaire. Un noeud quelconque du réseau poste à poste DHT reçoit une requête en mémorisation et calcule une valeur à partir de la fonction de hachage et l'adresse logique.

Cette valeur détermine un noeud particulier de l'ensemble des noeuds de la table de hachage distribuée DHT, vers lequel le premier noeud retransmet la requête en mémorisation. Le noeud ainsi désigné mémorise l'association.

Selon un mode de réalisation de l'invention, les noeuds de cette table de hachage distribuée sont formés par l'ensemble ou certains des éléments fonctionnels serveurs S₁, S₂... Sₙ.

Ce mode de réalisation permet de ne pas ajouter de nouvel élément au sein de l'architecture globale, et d'utiliser les éléments fonctionnels déjà définis. Il permet de mieux respecter la normalisation actuelle des sous-réseaux multimédia IMS.

Préférentiellement, l'élément fonctionnel de fédération FF présente une interface Dx utilisable par les autres éléments fonctionnels (serveurs S-CSCF, ou d'interrogation I-CSCF).

Cette interface Dx peut typiquement mettre en oeuvre le protocole Diameter, normalisé par l'IETF. Deux fonctions sont principalement utiles pour cette interface : une fonction permettant de mémoriser une nouvelle association, et une fonction permettant de récupérer la valeur associée à une valeur fournie.

### Enregistrement d'un nouveau client auprès d'un domaine

Lorsqu'un client de communication T s'enregistre auprès d'un domaine du sous-système de communication IMS, des informations sont mémorisées au sein de la table de hachage distribuée de l'élément fonctionnel de fédération FF. Ces informations contiennent l'association entre l'adresse logique de l'utilisateur de ce client de communication T et un identifiant de ce domaine.

Au sein du domaine lui-même, le client de communication est enregistré de façon connue en soi et ainsi que décrit précédemment.

### Appel entrant

Lors d'un appel entrant, un message de signalisation m est envoyé vers le sous-système multimédia IMS. Ce message de signalisation m est typiquement un message « Invite » conforme au protocole SIP. Il comporte l'adresse logique d'un abonné appelé. On suppose dans l'exemple de la figure 4 que cet abonné est l'utilisateur du client de communication T, connecté au domaine IMS₂.

Cette adresse est conformément aux spécifications du 3GPP et de l'ETSI TISPAN, un « identifiant universel de ressource », URI SIP (pour « *Universal Resource Identifier* »).

Il peut avoir la forme α@x.com. Le terme « α » identifie l'abonné tandis que le terme « x.com » identifie le sous-système multimédia IMS.

L'association de ce terme « x.com » avec le sous-système multimédia IMS est réalisée par le serveur de noms de domaine DNS. Il permet de déterminer une adresse physique (une adresse IP, par exemple) d'un point d'entrée de ce sous-système multimédia.

Typiquement, il est prévu pour prendre en compte des enregistrements de service dits « enregistrement SRV » définis par le RFC 2782 de l'IETF.

Dans la mesure où le sous-système multimédia selon l'invention ne possède pas d'uniquement point d'entrée, l'ensemble ou bien une partie des éléments fonctionnels d'interrogations I₁, I₂... Iₙ peut être associé au terme « x.com » au sein du serveur DNS. Celui-ci peut choisir quelle adresse renvoyer de façon aléatoire, ou bien en fonction d'une heuristique basée sur certains critères comme la charge des différents éléments fonctionnels d'interrogation, des priorités, etc.

Dans l'exemple de la figure 4, on suppose que le serveur de noms de domaine DNS a déterminé l'élément fonctionnel d'interrogation I₁. Le message de signalisation m est par conséquent transmis à cet élément fonctionnel.

Celui-ci interroge alors l'élément fonctionnel de fédération FF.

Dans sa requête, il insère l'adresse logique de l'utilisateur appelé (ici, « α@x.com »).

Il reçoit en réponse l'identifiant du domaine auprès duquel le terminal utilisé par l'appelé est connecté. Cet identifiant peut par exemple être l'adresse physique (IP) de l'élément fonctionnel d'interface du domaine en question.

Dans l'exemple de la figure 4, cet identifiant est celui du domaine IMS₂, et l'adresse physique renvoyée peut être celle de l'élément fonctionnel d'interface I₂.

L'élément fonctionnel d'interrogation I₁ peut alors transmettre le message de signalisation m vers l'élément fonctionnel d'interrogation I₂.

L'élément fonctionnel d'interrogation I₂ peut alors agir de façon conforme à la normalisation de l'IMS, puisque le domaine IMS₂ est un sous-système multimédia classique en soi. Le message de signalisation m peut alors être acheminé jusqu'au terminal T, utilisé par l'appelé.

Une autre situation peut survenir correspondant au cas où le terminal T serait connecté au domaine IMS₁. Dans cette situation, l'élément fonctionnel d'interrogation I₁ après interrogation de l'élément fonctionnel de fédération FF transmet directement le message de signalisation m dans son domaine IMS₁ (plus précisément vers l'élément fonctionnel serveur S₁).

### Appel sortant

En reprenant l'exemple de la figure 4, on suppose maintenant que le client de communication (ou terminal) T, connecté au domaine IMS₂, émette un message de signalisation représentatif d'un appel sortant.

Seul est décrit, en effet, le cas d'un appel sortant du domaine IMS₂. La situation où le client de communication appelé est connecté au même sous-système multimédia IMS₂ correspond à l'état de la technique en matière de fonctionnement d'un sous-système multimédia.

Dans le cas d'un appel sortant, le message de signalisation est transmis à travers le domaine ou sous-système multimédia IMS₂ jusqu'à l'élément fonctionnel serveur S₂ (éventuellement par l'intermédiaire d'un élément fonctionnel de proximité P-CSCF non représenté).

Cet élément fonctionnel serveur S₂ peut alors être prévu pour interroger l'élément fonctionnel de fédération FF afin de déterminer un chemin (ou route) pour ce message de signalisation.

Deux cas de figure peuvent alors survenir : l'appelé peut être connecté à l'un des domaines IMS₁... IMSₙ, ou bien à un autre réseau ou sous-système multimédia.

Comme dans la situation d'un appel entrant, décrite précédemment, l'élément fonctionnel de fédération FF peut déterminer à quel domaine le client de communication appelé est connecté.

Selon une première mise en oeuvre, l'élément fonctionnel serveur S₂ interroge systématiquement l'élément fonctionnel de fédération FF. Si l'appelé est connecté à un des autres domaines, celui-ci le détermine et renvoie un identifiant du domaine déterminé. Si l'appelé n'est pas connecté à un de ces domaines IMS₁... IMSₙ, l'élément fonctionnel de fédération FF ne trouve pas son adresse et renvoie un message particulier qui peut être interprété par l'élément fonctionnel serveur S₂ comme signifiant que le client de communication appelé est extérieur aux domaines IMS₁... IMSₙ. Ce message particulier peut être un message d'erreur ou bien un message comportant un identifiant spécifique pour indiquer l'absence du client de communication appelé dans sa base d'information.

Il est également possible de prévoir que les éléments fonctionnels serveurs disposent de moyens pour déterminer si le client de communication fait ou non partie d'un des domaines IMS₁... IMSₙ sans avoir à interroger l'élément fonctionnel de fédération FF.

Selon un autre mode de réalisation de l'invention, le domaine est configuré de sorte que tous les messages de signalisation sortants sont transmis à l'élément fonctionnel d'interrogation I-CSCF.

Ce mode de réalisation peut par exemple être mis en oeuvre en conférant à l'élément fonctionnel d'interrogation I-CSCF les fonctions d'une passerelle THIG (« *Topology Hiding Internetwork Gateway* »). L'élément fonctionnel d'interrogation I-CSCF sert alors d'unique interface entre le sous-système IMS et les réseaux de communication extérieurs. Il permet aussi de masquer la topologie interne de l'IMS vis à vis de ces réseaux extérieurs.

Les fonctionnalités d'une passerelle THIG sont spécifiées dans les documents TS 24.228 et TS 23.228 du 3GPP.

Dans ce mode de réalisation, ce sont les éléments fonctionnels d'interfaces qui sont prévus pour interroger l'élément fonctionnel de fédération.

Cette interrogation peut être systématique : À réception du message de signalisation en provenance du client de communication T, l'élément fonctionnel d'interrogation I₂ interroge l'élément fonctionnel de fédération FF. Celui-ci lui répond soit par un identifiant du domaine auquel le client appelé est connecté, ou bien une valeur indiquant que le client appelé n'est connecté à aucun des domaines IMS₁... IMSₙ.

Comme évoqué dans le mode de réalisation précédent, l'élément fonctionnel d'interrogation I₂ est prévu pour, à réception du message de signalisation, déterminer si le client de communication appelé (i.e. destinataire du message de signalisation) est connecté à un des domaines IMS₁... IMSₙ. Ces moyens sont des moyens propres, indépendant de l'élément fonctionnel de fédération, et permettent de réduire les communications engendrées par le routage d'un message de signalisation.

Pour ce faire, l'élément fonctionnel d'interrogation I₂ peut comporter une table mémorisant l'ensemble des clients de communication connectés à l'un des domaines.

Alternativement, la détermination peut se baser sur une convention de nom. L'adresse logique du client de communication peut être fonction du sous-système multimédia global. Par exemple, l'adresse α@x.com signifie que le terminal « α » est connecté au domaine global déterminé par le nom de domaine « x ». Avec une telle convention, il est facile de déterminer par les éléments fonctionnels d'interrogation si ce nom correspond à son propre nom ou pas.

Si ce n'est pas le cas, c'est que le client appartient à un autre réseau et que le message de signalisation doit être routé vers l'extérieur. Si le nom correspond, c'est au contraire que l'élément fonctionnel de fédération doit être interrogé et que le message de signalisation doit être acheminé vers le domaine correspondant à la réponse donnée par cet élément fonctionnel de fédération FF.

Ce mode de fonctionnement dans lequel tous les messages de signalisation sortant transitent par l'élément fonctionnel d'interrogation (mode « THIG ») présente l'avantage de ne nécessiter la modification que des éléments fonctionnels d'interrogation. Dans la situation d'un appel entrant ou dans celle d'un appel sortant, c'est à eux qu'incombe la charge d'interroger l'élément fonctionnel de fédération FF, et eux seuls donc doivent être prévu pour cela et pour traiter la réponse de l'élément fonctionnel de fédération FF.

Les autres éléments fonctionnels, notamment les éléments fonctionnels serveurs sont inchangés.

Un tel mode de fonctionnement réduit donc l'impact de cette nouvelle fonctionnalité sur l'architecture globale du réseau de communication, et le coût de son ajout.

Dans tous les cas, l'élément fonctionnel d'interrogation (« mode THIG ») ou l'élément fonctionnel serveur (autre mode de réalisation) sont prévus pour déterminer si le client de communication destinataire est connecté à un des domaines (que ce soit par ses propres moyens, ou par interrogation de l'élément fonctionnel de fédération FF).

Dans la négative, il transmet le message de signalisation vers l'extérieur du réseau. Sinon, il le transmet vers le domaine correspondant à l'identifiant renvoyé par l'élément fonctionnel de fédération FF.

La présente invention permet ainsi de fédérer un ensemble de sous-systèmes multimédia (les domaines) de taille réduite pour en former un plus grand.

Le sous-système multimédia global IMS peut en effet présenter une interface vis à vis des autres réseaux de communication qui masque son implémentation et le fait qu'il comporte une pluralité de domaines IMS₁, IMS₂... IMSₙ. L'élément fonctionnel de fédération permet ainsi de rendre l'architecture du sous-système multimédia et sa décomposition en une pluralité de domaines, transparentes pour les émetteurs des messages de signalisation et pour le reste des réseaux de communication.

Il devient ainsi possible d'ouvrir certains des domaines - de taille plus réduite - à la gestion d'opérateurs privés. Par exemple, un domaine peut représenter une société ou une filiale d'une société et sa gestion peut être laissée à la responsabilité d'un administrateur de cette société ou de cette filiale.

Le sous-système multimédia global, fédérant plusieurs domaines, peut être lui administré par un opérateur qui garanti l'interface vis-à-vis du réseau extérieur.

Il est également à noter que les deux mises en oeuvre peuvent en outre être combinées, de sorte que les éléments fonctionnels de sélection d'abonnés (SLF) contenus dans chaque domaine IMS₁, IMS₂... IMSₙ soit mis en oeuvre par une table de hachage distribuée, et que ces domaines soient fédérés par un élément fonctionnel de fédération FF.

D'un point de vue architectural l'élément fonctionnel de fédération FF peut être intégré avec d'autres éléments fonctionnels. Notamment, un bloc comprenant l'élément fonctionnel de fédération FF et le serveur de noms de domaine DNS peuvent être intégrés en une seule et même fonction, formant un système.

## Revendications

1. Élément fonctionnel de fédération (FF) pour sous-système multimédia, IMS, ledit élément fonctionnel de fédération comportant des moyens pour déterminer un domaine à partir d'une adresse logique contenue dans un message de signalisation, lesdits moyens mettant en oeuvre une table de hachage distribuée dont les noeuds sont au moins certains des éléments fonctionnels serveurs, S-CSCF, desdits domaines.

2. Élément fonctionnel de fédération (FF) selon la revendication précédente, présentant une interface Dx mettant en oeuvre le protocole Diameter.

3. Élément fonctionnel de fédération (FF) selon l'une des revendications précédentes, présentant une interface comportant une première fonction permettant l'insertion d'une association entre adresse logique et domaine et une seconde fonction permettant la détermination du domaine correspondant à une adresse logique donnée.

4. Procédé de transmission d'un message de signalisation au travers d'un sous-système multimédia, IMS, comportant une pluralité de domaines comportant chacun un ensemble d'éléments fonctionnels de contrôle de session d'appel, 5-CSCF, I-CSCF, entre un premier client de communication, connecté audit sous-système multimédia, et un second client de communication, ledit second client de communication étant connecté audit sous-système multimédia ou distant et accessible au travers d'un élément fonctionnel d'interrogation, I-CSCF, ledit procédé comprenant une étape de détermination d'un chemin pour la transmission dudit message de signalisation, à partir d'une adresse logique contenue dans ledit message de signalisation, **caractérisé en ce que** ladite étape comporte une étape de détermination d'un domaine à partir de ladite adresse logique, par un élément fonctionnel de fédération (FF) mis en oeuvre par une table de hachage distribuée dont les noeuds sont au moins certains des éléments fonctionnels serveurs, S-CSCF, desdits domaines, et **en ce que** ledit chemin passe par ledit domaine.

5. Produit logiciel mettant en oeuvre le procédé selon la revendication précédente lorsqu'il est exécuté sur un dispositif de traitement de l'information.

6. Système comportant un serveur de noms de domaine, DNS, et un élément fonctionnel de fédération selon l'une des revendications 1 à 3.

## Patentansprüche

1. Verbund-Funktionselement (FF) für ein Multimedia-Teilsystem, IMS, wobei das besagte Verbund-Funktionselement Mittel zum Ermitteln einer Domain ausgehend von einer in einer Signalisierungsnachricht enthaltenen logischen Adresse umfasst, wobei die besagten Mittel eine verteilte Hash-Tabelle anwenden, deren Knoten zumindest bestimmte der Server-Funktionselemente, S-CSCF, der besagten Domains sind.

2. Verbund-Funktionselement (FF) nach dem vorstehenden Anspruch, welches eine Dx-Schnittstelle aufweist, die das Diameter-Protokoll anwendet.

3. Verbund-Funktionselement (FF) nach einem der vorstehenden Ansprüche, welches eine Schnittstelle aufweist, die eine erste Funktion für das Einfügen einer Assoziation zwischen logischer Adresse und Domain und eine zweite Funktion für das Ermitteln der einer gegebenen logischen Adresse entsprechenden Domain umfasst.

4. Verfahren zur Übertragung einer Signalisierungsnachricht über ein Multimedia-Teilsystem, IMS, mit einer Vielzahl von Domains, welche jeweils einen Satz von Funktionselementen zur Steuerung einer Anrufsitzung, S-CSCF, I-CSCF, zwischen einem ersten Kommunikations-Client, welcher an das besagte Multimedia-Teilsystem angeschlossen ist, und einem zweiten Kommunikations-Client umfassen, wobei der besagte zweite Kommunikations-Client an das besagte Multimedia-Teilsystem angeschlossen ist, oder entfernt und über ein Abfrage-Funktionselement, I-CSCF, zugänglich ist, wobei das besagte Verfahren einen Schritt des Ermittelns eines Pfads für die Übertragung der besagten Signalisierungsnachricht ausgehend von einer in der besagten Signalisierungsnachricht enthaltenen logischen Adresse umfasst, **dadurch gekennzeichnet, dass** der besagte Schritte einen Schritt des Ermittelns einer Domain, ausgehend von der besagten logischen Adresse, durch ein Verbund-Funktionselement (FF), welches von einer verteilten Hash-Tabelle, deren Knoten zumindest bestimmte der Server-Fuktionselemente, S-CSCF, der besagten Domains sind, bedient wird, umfasst, und dass der besagte Pfad über die besagte Domain führt.

5. Software-Produkt, welches ein Verfahren gemäß dem vorstehenden Anspruch durchführt, wenn es auf einer Informationsverarbeitungsvorrichtung ausgeführt wird.

6. System, umfassend einen Domainnamen-Server, DNS, und ein Verbund-Funktionselement gemäß einem der Ansprüche 1 bis 3.

## Claims

1. A federating functional element (FF) for a multimedia subsystem, IMS, said federating functional element containing means to determine a domain based on a logical address contained in a signaling message, said means implementing a distributed hash table whose nodes are at least some of the functional server elements, S-CSCF, of said domains.

2. A federating functional element (FF) according to the preceding claim, exhibiting a Dx interface implementing the Diameter protocol.

3. A federating functional element (FF) according to one of preceding claims, exhibiting an interface comprising a first function used to insert an association between the logical address and domain and a second function used to determine the domain corresponding to a given logical address.

4. A method for transmitting a signaling message through a multimedia subsystem, IMS, comprising a plurality of domains, each comprising a set of call session control function elements, S-CSCF, I-CSCF, between a first communication client, connected to said multimedia subsystem, and a second communication client, said second communication client being either connected to said multimedia subsystem, or remote and accessible through an interrogating functional element, I-CSCF, said method comprising a step of determining a path for the transmission of said signaling message, based on a logical address contained in said signaling message, **characterized in that** said step comprises a step of determining a domain based on said logical address, performed by a federating functional element (FF) implemented by a distributed hash table whose nodes are at least some of the functional server elements, S-CSCF, of said domains, and **in that** said path passes through said domain.

5. A software product implementing the method according to the preceding claim when it is run on an information processing device.

6. A system comprising a domain name server, DNS, and a federating functional element according to one of claims 1 to 3.
